# EUROPÄISCHE PATENTSCHRIFT

(11) **EP 0 354 462 B1**
(45) Veröffentlichungstag und Bekanntmachung des Hinweises auf die Patenterteilung: **05.04.1995**
(21) Anmeldenummer: 89114285.3
(22) Anmeldetag: 02.08.1989
(51) Int. Cl.: H04N 5/335, G01J 5/28, H01L 27/14

(54) **Schaltungsanordnung für Infrarotdetektoren**
Circuit arrangement for an infrared detector
Agencement de circuit pour détecteurs d'infrarouge

(30) Priorität: 12.08.1988 DE 3827465
(43) Veröffentlichungstag der Anmeldung: 14.02.1990
(73) Patentinhaber: STEINHEIL OPTRONIK GMBH, D-85737 Ismaning (DE)
(72) Erfinder: Krause, Gerhard, D-8200 Rosenheim/Egarten (DE)
(74) Vertreter: Pätzold, Herbert, Dr.-Ing.

(56) Entgegenhaltungen:
- EP-A- 0 207 826
- GB-A- 2 181 010

## Beschreibung

Die Erfindung betrifft eine Schaltungsanordnung für Infrarotdetektoren in Wärmebildgeräten mit Fotowiderständen als Detektorelemente.

Hochempfindliche Geräte zum Erfassen von Infrarotstrahlung, insbesondere Wärmebildgeräte haben einen Detektor, der aus vielen unabhängigen Detektorelementen besteht. Beim derzeitigen Stand der Technik ist im Wellenlängenbereich um 10»m die maximale Anzahl der Detektorelemente auf etwa 300 beschränkt. Deswegen muß das Bild optisch abgetastet werden. Im Wellenlängenbereich um 4 »m gibt es zwar Detektoren mit 250.000 Detektorelementen. Der Quantenwirkungsgrad dieser Detektoren ist aber so schlecht, daß für hochempfindliche Geräte auch in diesem Bereich das Bild mit einer wesentlich geringeren Anzahl Detektorelementen gescant wird.

Beim derzeitigen Stand der Technik sind für die oben genannten Infrarotbereiche Detektoren mit elektronischen Scan-Verfahren nach dem CCD-Prinzip nicht verfügbar. Es wird deswegen jedem Detektorelement ein Vorverstärker und ein Nachverstärker zugeordnet.

Weiterhin wird in diesen Wellenlängenbereichen die Fertigung von Detektorfeldern mit Fotodioden nicht beherrscht. Deswegen werden Fotowiderstände für die Detektorelemente verwendet. Die Verstärker müssen also für Fotowiderstände als Signalquellen optimiert sein.

Wegen der großen Anzahl der Kanäle, z.B. 288, ist beim jetzigen Stand der Technik der Aufwand für die Verstärker sehr groß. Es werden 288 Vorverstärker und 288 Nachverstärker benötigt. Hinzu kommt, daß die Verstärker kapazitiv gekoppelt sind, so daß noch eine große Anzahl Koppelkondensatoren hinzukommt.

Die Kapazität der Koppelkondensatoren ist verhältnismäßig groß, weil die Scan-Frequenz nur 50 Hz beträgt. Deswegen wird oft ein Kompromiß gemacht und die Koppelkondensatoren zu klein dimensioniert, was dann zu unerwünschten Dachschrägen im Signal führt.

Ein weiterer Nachteil bei den bekannten Geräten ist, daß die 288 Kanäle erst nach dem Nachverstärker mit einem Multiplexer zu einem Kanal zusammengefaßt werden. An dieser Stelle ist der Signalpegel bereits verhältnismäßig groß. Das bedeutet, daß die Stellglieder für Helligkeit und Kontrast vor dem Multiplexer angeordnet werden müssen, um den notwendigen Dynamikumfang der Signalübertragung zu erhalten. Entsprechend müssen mindestens 576 Stellglieder vorgesehen werden, die relativ zueinander einen guten Gleichlauf haben sollten. Beim jetzigen Stand der Technik ist der Gleichlauf aber unbefriedigend.

Aufgabe der Erfindung ist es, eine Schaltungsanordnung der eingangs genannten Art zu schaffen, mit der die oben genannten Nachteile vermieden werden.

Die vorstehende Aufgabe wird erfindungsgemäß mit den Merkmalen des Anspruches 1 gelöst.

Vorteilhafte Ausführungen und Weiterbildungen ergeben sich aus den Merkmalen der abhängigen Ansprüche.

Durch die EP-A-0 207 828 ist zwar bereits eine Schaltungsanordnung für Infrarotdetektoren bekannt. Es handelt sich hier jedoch nicht um einen mit der Erfindung vergleichbaren Offset-Spannungsregelkreis. Die durch die GB-A-2 181 018 noch bekannt gewordene Schaltungsanordnung ist für Fotowiderstände nicht verwendbar.

Die erfindungsgemäße Schaltungsanordnung ist wegen der relativ geringen Anzahl der Bauteile einfach im Aufbau und beansprucht dementsprechend einen kleinen Bauraum. Sie liefert einen guten Störabstand. Die Schaltungsanordnung benötigt keine Koppelkondensatoren.

Bei der erfindungsgemäßen Schaltungsanordnung bilden Integrator und Multiplexer eine charakteristische Funktionseinheit. Der Integrator mit periodischer Entladung hat eine gute Filterwirkung, so daß aufwendige Filterschaltungen in den Vorverstärkern entfallen und daß der Entladeschalter des Integrators zugleich als Multiplexer genutzt werden kann, das nachfolgende Vorteile hat:
a) Das Zusammenfassen der 288 Kanäle mittels Multiplexer erfolgt im Signalweg relativ weit vorn. Entsprechend ist die Anzahl der benötigten Bauelemente und damit das erforderliche Bauvolumen klein. Außerdem wird Versorgungsenergie gespart.
b) Die Stellglieder für die Kontrasteinstellung und - noch wichtiger - auch für die Helligkeitseinstellung beeinflussen das Signal bereits nach verhältnismäßig geringer Verstärkung (100-fach). Das garantiert einen sehr großen Dynamikumfang eines Wärmebildgerätes. Mit diesem Gerät kann jede Objekttemperatur im Bereich von -50°C bis +70°C auf dem Bildschirm des Monitors bei beliebigen Grauwerten - d.h. nicht übersteuert - dargestellt werden. Diese Eigenschaft ist bei allen Stellungen des Kontrastreglers, also auch bei der maximalen Verstärkung, vorhanden.
   Die Stellglieder für die Helligkeit und den Kontrast können im gemeinsamen Verstärkerabschnitt (Hauptverstärker) angeordnet werden, so daß keine Streifigkeit durch Gleichlaufeffekt von Stellgliedern verursacht werden kann.
c) Der gesamte Signalweg, vom Detektor bis zum Ausgang kann vorteilhafterweise gleichspannungsgekoppelt sein. Koppelkondensatoren, die bei den tiefen Scan-Frequenzen Dachschrägen im Signal liefern könnten, gibt es nicht. Zudem entfällt das Problem der Erholzeiten nach großer Übersteuerung vollständig.
d) Vorteilhafterweise enthält die Signalverarbeitung eine aus der Fernsehtechnik bekannte Klemmung. Damit wird die vom Bediener gewählte Referenztemperatur festgehalten, auch wenn sich beim Schwenken oder beim Ändern der Objekttemperaturen die Signaleverändern.
   Diese Eigenschaft ist besonders wichtig beim Verfolgen schnell bewegter Objekte. Sie ist für einen großen Dynamikumfang der erfindungsgemäßen Schaltungsanordnung und für die Nutzung der vollen Schaltungsempfindlichkeit unter allen Beobachtungsbedingungen notwendig; z.B. wenn in einer kontrastreichen Szene trotzdem die volle Verstärkung eingestellt wird, um ein Objekt mit geringem lokalem Kontrast zu erkennen, wobei die Temperaturen des Objekts stark von der mittleren Temperatur der Szene abweichen.
   Die vorstehend genannte Klemmung hat außerdem die Aufgabe, die resultierende Offsetspannungen der Verstärker auf Null zu regeln.

Weitere Einzelheiten der erfindungsgemäßen Schaltungsanordnung werden anhand der Zeichnung für Ausführungsbeispiele beschrieben. Es zeigen:
- Figur 1: ein erstes Schaltbild einer erfindungsgemäßen Schaltungsanordnung,
- Figur 2: ein Diagramm zur Verdeutlichung der Filtereigenschaft der Schaltungsanordnung mit periodischer Entladung,
- Figur 3: ein die erfindungsgemäße Schaltungsanordnung einschließendes Blockschaltbild des gesamten Signalweges eines Wärmebildgerätes bis zum Ausgang des Nachverstärkers,
- Figuren 4 bis 6: verschiedene Schnellentladungsschaltungen und
- Figur 7: ein weiteres Schaltbild einer erfindungsgemäßen Schaltungsanordnung.

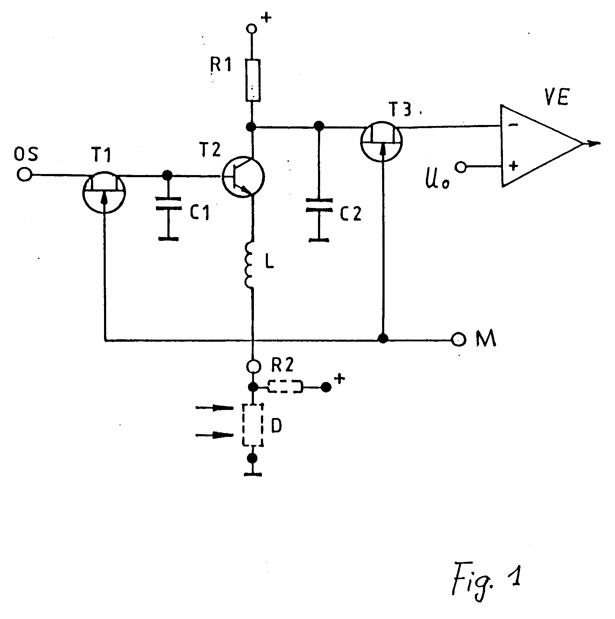

Figur 1 zeigt eine erfindungsgemäße Schaltungsanordnung in einer beispielsweisen Ausführung.

Einer der 288 Detektoren D liegt in Reihe mit einer Induktivität L in der Emitterleitung eines Transistors T2,an dessen Basis ein elektronischer Schalter T1 und ein Kondensator C1 als Teile eines Spannungsregelkreises liegen. Dem elektronischen Schalter T1 wird eine Regelspannung OS zugeführt. Der Kollektorgleichstrom für den Transistor T2 wird über einen Widerstand R1 geliefert. Am Kollektor des Transistors T2 liegt ein Kondensator C2 und ein elektronischer Schalter T3, dessen Ausgangssignale an den einen Eingang eines Entladungsverstärkers VE geführt sind. Am Eingang M liegt eine Steuerspannung zur Steuerung der elektronischen Schalter T1 und T3.

Der Transistor T2 verstärkt die Signalspannung des Detektors D. Die Zeitkonstante (R1 . C2) ist größer als eine Abtastperiode zwischen zwei aufeinanderfolgenden Detektoren. Deswegen arbeitet die Schaltungsanordnung als Integrator für den vom Detektor D gelieferten Fotostrom. Der während einer Abtastperiode im Kondensator C2 gespeicherte Signalstrom wird während der kurzen Abtastzeit (∼ 40 ns) über den elektronischen Schalter T3 (Multiplexer) auf die Referenzspannung U₀ entladen. Hierzu hat die Eingangsstufe des Verstärkers VE einen aktiven Eingangswiderstand, der die Umladung beschleunigt. Es wird nur ein gemeinsamer Verstärker VE für alle 288 Kanäle benötigt. Der mittlere Gleichstrom für den Transistor T2 wird über den Widerstand R1 geliefert, so daß über den Schalter T3 nur die Signalströme fließen.

Die Entladedauer ist damit wesentlich kürzer als die Abtastperiode, vorzugsweise gleich oder kleiner als der N-te Teil der Abtastperiode, wobei N die Anzahl der Detektorelemente ist und die elektrische Ladung und der Strom während der Entladung als Maß für die Pixelamplitude ausgewertet wird.

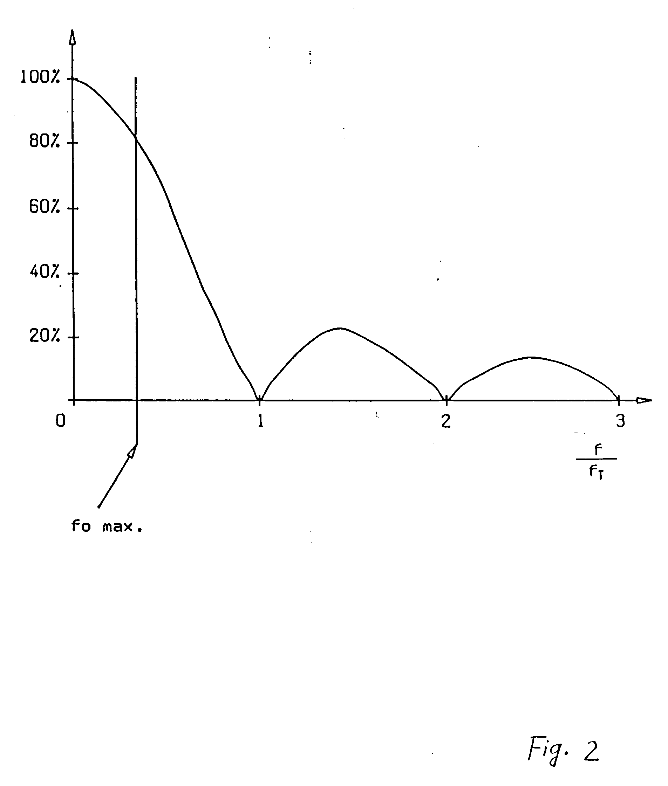

Diese Schaltung hat trotz des geringen Aufwandes eine gute Filterwirkung Fig. 2 zeigt den relativen Frequenzgang von Kondensator C2 zusammen mit dem Schalter T3. Der Einfluß der Induktivität L ist also nicht berücksichtigt.

Auf der horizontalen Achse ist die auf die Spaltenabtastfrequenz f_{T} normierte Frequenz f/f_{T} aufgetragen. Die maximale Signalfrequenz fₒₘₐₓ ,die optische Information enthält, beträgt 26,25 kHz. Diese Frequenz ist in Fig. 2 ebenfalls eingetragen.

Der Frequenzbereich zwischen 0,5 . fₒₘₐₓ und der ersten Nullstelle der Frequenzgangfunktion, der nur Rauschen enthält, wird durch Filter unterdrückt, die dem Multiplexer T3 nachgeordnet sind. Unerwünschte Frequenzen oberhalb dieser ersten Nullstelle würden durch den Samplingprozeß an der halben Samplingfrequenz gespiegelt und fielen somit in den Nutzsignalbereich. Deswegen werden diese Frequenzen zusätzlich mit der Induktivität L in der Emitterleitung des Transistors T2 frequenzabhängig gedämpft. Eine noch größere Dämpfung kann erfindungsgemäß erreicht werden, wenn durch Parallelschalten eines Kondensators zur Induktivität L ein Sperrkreis geschaffen wird. Der Frequenzabfall im Nutzsignalbereich wird durch ein Anhebungsglied im Hauptverstärker korrigiert.

Bei der Beurteilung der notwendigen Filterdämpfung ist zu beachten, daß die Rauschkomponenten quadratisch addiert werden, wodurch der Einfluß gedämpfter Frequenzbereich auf das Gesamtrauschen überproportional verringert wird.

Der Detektor D ist erfindungsgemäß in der Emitterleitung des Transistors T2 angeordnet. Diese Anordnung hat den Vorteil, daß die Toleranzen von Quantenwirkungsgrad und Widerstand des Detektorelements sich nicht addieren. Die Unterschiede der Signale am Ausgang der einzelnen 288 Vorverstärkerkanäle sind also geringer als bei der konventionellen Basisansteuerung. Zwar ist die Leistungsverstärkung der Emitterschaltung geringer als die einer Basisschaltung, sie ist aber ausreichend.

Bei den hier gegebenen Bedingungen sind die Störabstände, die mit den beiden möglichen Grundschaltungen erreichbar sind, gleich.

Bei sehr tiefen Frequenzen hat die Schaltung den Vorteil, daß der effektiv wirksame äußere Widerstand im Basiskreis nahezu Null ist. Entsprechend ist auch das Basisstrom-Funkelrauschen im Gegensatz zu Schaltungen mit Koppelkondensatoren im Basiskreis sehr gering, weil dort die Impedanz der Koppelkondensatoren bei sehr tiefen Frequenzen stark ansteigt.

Der als Multiplexer arbeitende MESFET T3 schaltet das Signal auf den für alle Vorverstärkerkanäle gemeinsamen Ausgang. Es werden GaAs-FET's als Schalter verwendet, weil damit sehr kurze Schaltzeiten, kleine Einschaltwiderstände, niedrige Schaltstörspannungen und sehr niedriges Übersprechen zwischen Eingang und Ausgang realisierbar sind. Trotzdem sind die Schaltstörungen im Vergleich zum kleinsten Signal nicht vernachlässigbar. Diese Reststörungen wirken aber nur wie eine Offset-Spannung der Verstärker und werden somit durch den erfindungsgemäßen Offset-Spannungsregelkreis unwirksam gemacht.

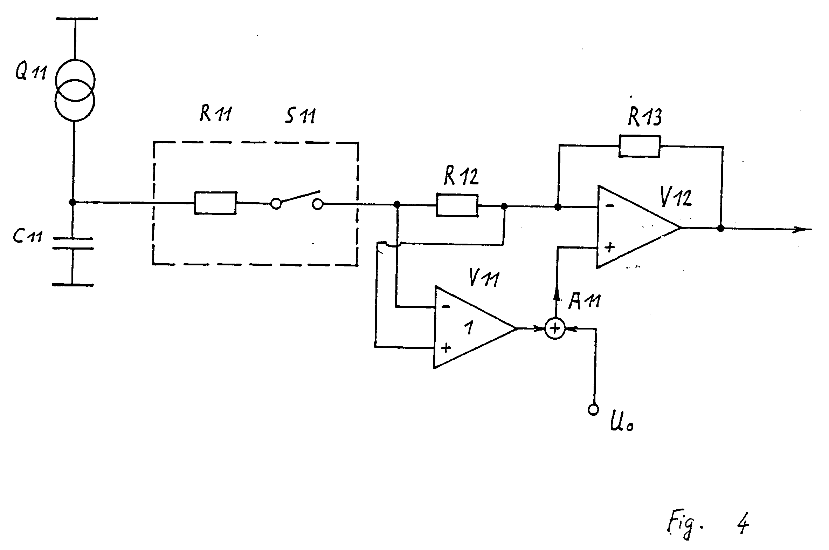

Die Bauelemente T1, C1 gehören zu dem Offset-Spannungsregelkreis. Der Feldeffekt-Transistor T1,der auch ein bipolarer Transistor sein kann, schaltet die Regelspannung OS jeweils kurzzeitig auf den Kondensator C1. Dieser Kondensator speichert die Information bis zum nächsten Schalten. Der Offset-Spannungsregler verstellt die Spannung OS solange, bis am Kollektor des Transistors T2 zur Zeit, wenn die Klemmfläche abgetastet wird, die Spannung U₀ liegt. Das Umladen des Kondensators C1 kann durch eine äußere, aktive Schaltung - die für alle 288 Kanäle gemeinsam ist - z.B. eine Schaltung nach Fig. 4, 5 oder 6 beschleunigt werden.

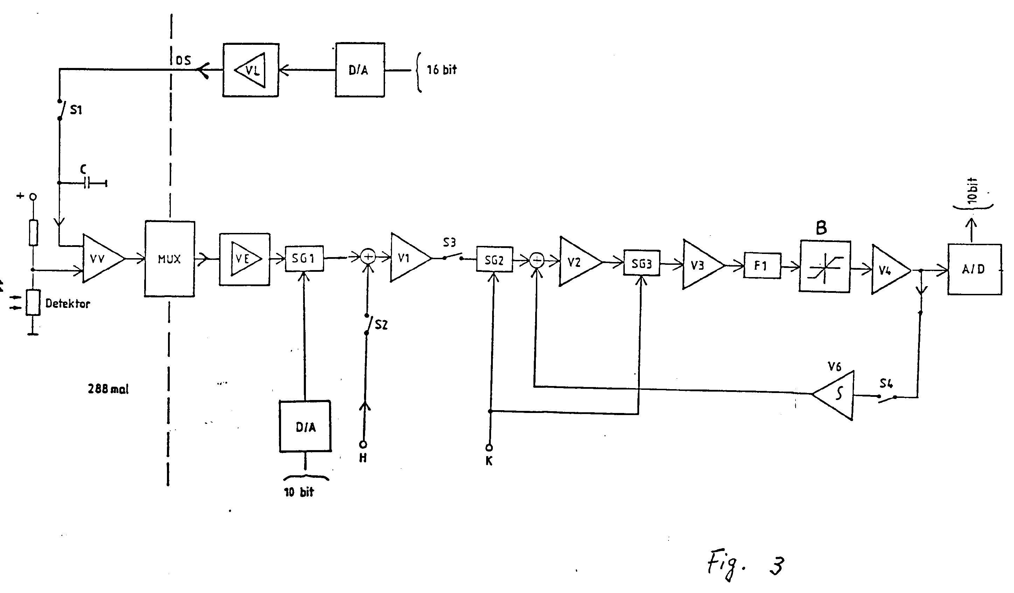

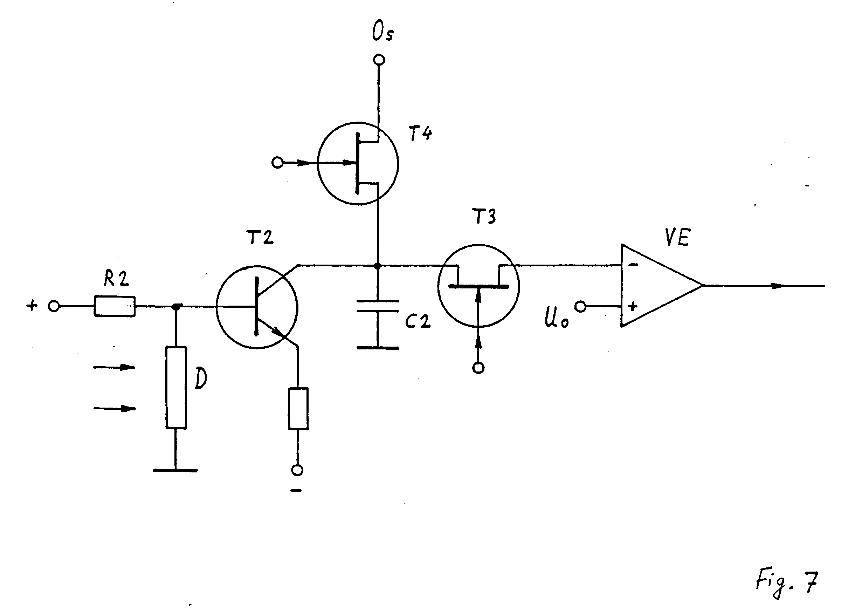

Fig. 3 zeigt das Blockschaltbild der analogen Signalverarbeitung, z.B. für ein Wärmebildgerät. Die Elemente links von der gestrichelten Linie werden je einem Detektorelement zugeordnet, sie werden daher 288 mal benötigt. Dagegen werden in dem Abschnitt rechts davon sequentiell die Signale von allen 288 Detektorelementen verarbeitet. Entsprechend sind die Funktionselemente dieses Abschnittes nur einmal erforderlich. Die Elemente links der gestrichelten Linie beinhalten die erfindungsgemäße Schaltungsanordnung, z.B. nach Fig. 1 oder 7. Die wesentlichen Teile dieser Schaltungsanordnung sind hier mit den entsprechenden Bezugszeichen in Fig.1 benannt. Der als Vorverstärker bezeichnete Verstärker VV wird im Zusammenwirken mit dem Multiplexer T3 von dem Transistor T2, dem Widerstand R1, der Induktivität L und dem Kondensator C2 gebildet.

Der Ausgang des Multiplexers T3 steuert den Entladeverstärker VE, der die in den Kondensatoren der Vorverstärker gespeicherte, dem Detektorsignal proportionale Ladung in eine Spannung umsetzt. Außerdem muß durch diesen Verstärker die Ladung dieser Kondensatoren wieder auf einen definierten Wert zurückgesetzt werden. Danach folgt das Stellglied SG1, das die individuelle Verstärkungsregelung der 288 Kanäle vornimmt.

Nach dem Stellglied SG1 wird das vom Helligkeitsregler kommende Signal H addiert. Das Vorzeichen des Helligkeitssignals ist dabei jeweils so, daß die Amplitude des weiter zu verarbeitenden Signals in die Nähe der Amplitude des Signals gebracht wird, das beim Abtasten der Klemmfläche vorhanden ist. Das ist notwendig, weil der Signaluntergrund, der durch diese Maßnahme weitgehend eliminiert wird, mehrere Zehnerpotenzen größer ist als das kleinste nachweisbare Signal sein kann. Somit werden an die folgenden Stufen nur noch geringe Anforderungen in bezug auf das Großsignalverhalten gestellt.

Der elektronische Schalter S2 schließt, während das Bild abgetastet wird. Er ist offen, wenn die Klemmflächen abgetastet werden und während des Scanner-Rücklaufs.

Die folgenden Verstärker V1, V2, V3 sind sehr breitbandig (100 MHz). Besonders wichtig ist, daß ihre Erholzeit nach einer Übersteuerung viel kleiner als die Signaldauer für ein Pixel ist. Das ist notwendig, weil bei großen Verstärkungen beim Betrachten kontrastreicher Bilder Übersteuerungen in nicht interessierenden Teilen des Bildes unvermeidlich sind. Die kurzen Erholzeiten garantieren nun dafür, daß nach den übersteuerten Bildabschnitten kein Nachziehen auftritt.

Insbesondere der Verstärker V1 ist auch sehr rauscharm, weil die Rauschbandbreite des gemeinsamen Kanals um etwa einen Faktor 300 größer als die der Verstärker ist.

Mit den Stellgliedern SG2, SG3 kann die Verstärkung eingestellt werden. Hierzu wird ein Kontrastsignal K eingespeist. Das Filter F1 begrenzt die Bandbreite auf die für die Multiplexübertragung unbedingt notwendige Bandbreite von ∼ 25 MHz. Das ist erforderlich, damit die Amplitude des hinter dem Multiplexer entstehenden Rauschens zu vernachlässigen ist im Vergleich zum Rauschen vom Detektor. Das im gemeinsamen Kanal erzeugte Rauschen ist zwar wesentlich breitbandiger als das Vorverstärkerrauschen, ohne Tiefpaß würde es aber an der nichtlinearen Kennlinie des Begrenzers B irreversibel in den Nutzsignalbereich gespiegelt werden.

Der Begrenzer B liefert am Ausgang eine Signalamplitude, die dem Aussteuerbereich des A/D-Wandlers angepaßt ist. Auf diese Weise wird die Übersteuerung des A/D-Wandlers vermieden. Die Erholzeit des A/D-Wandlers ist größer als die des Begrenzers B. Ohne Begrenzer B könnte es deswegen zu Übersprechen zwischen zeitlich benachbarten Signalen kommen, was besonders deswegen vermieden werden muß, weil aufgrund des Zeilensprungverfahrens und des gewählten Spaltenabtastverfahrens zeitlich benachbarte Signale nicht räumlich benachbarten Pixeln entsprechen.

Der Verstärker V4 treibt den A/D-Wandler. Das Stellsignal OS des Offset-Spannungsregelkreises stellt die Spannung am Ausgang des Verstärkers V4 - während die Klemmflächen abgetastet werden - auf einen vorgegebenen Bezugspegel ein.

Ein weiterer Regelkreis über die Bauelemente S4, V6 sorgt für einen Offset-Spannungsabgleich der Verstärkerkette V2 bis V4; dieser Regelkreis arbeitet während der Rücklaufzeit des Scanners. Dazu wird während dieser Zeit der Schalter S3 geöffnet und S4 geschlossen; der Integrator V6 regelt dann solange nach, bis an seinem Eingang (= Ausgang V4) die Spannung zu Null geworden ist. Das ist für Verstärker mit großem Dynamikumfang wichtig, damit bei Veränderung der Verstärkung von Hand mittels des Kontrastsignals K keine Gleichspannungen (Offset-Spannungen) verändert werden, denn das würde dazu führen, daß der Regelkreis über S1 bei Betätigen des Handreglers für einige Sekunden aus dem Gleichgewicht kommt.

Wegen der besonderen Bedeutung für die Signalverarbeitung im Wärmebildgerät wird hier der erfindungsgemäße Offsetspannungsregelkreis noch einmal zusammenhängend beschrieben.

Dieser Offset-Spannungsregelkreis ermöglicht eine Gleichspannungskopplung vom Detektor bis zum Ausgang des Hauptverstärkers, indem die resultierende Offsetspannung zu Null geregelt wird. Außerdem übernimmt dieser Regler die Aufgabe, die sonst die Klemmschaltung hat.

Vom digitalisierten Ausgangssignal des Hauptverstärkers wird, während die Klemmfläche abgetastet wird, im Systemkontroller über viele Abtastperioden für jeden Kanal ein Mittelwert gebildet; aus diesem Wert wird ein Korrektursignal OS berechnet, so daß beim Abtasten der Klemmfläche die Amplitude des Signals am Ausgang des Vorverstärkers in allen Kanälen gleich groß ist. Dazu wird nach Umsetzung in die analoge Stellgröße OS, das Signal dem als Regelspannungs-Multiplexer arbeitenden Transistor T1, der im Beispielsfall am Vorverstärker VV angeordnet ist, zugeführt. Dieser Schalter T1 wird für 40 ns leitend, so daß während dieser Zeit der Kondensator C1 auf dem Momentanwert der Regelspannung OS aufgeladen wird. Zur Beschleunigung der Umladung ist eine, hier nicht eingezeichnete, aktive Ladeschaltung vorhanden. Es wird nun eine Ladeschaltung für alle Vorverstärkerkanäle benötigt.

Die optische Bezugsfläche links vom abzutastenden Bild wird als Referenzstrahler für den Offset-Regelkreis verwendet. Rechts vom Bild ist eine entsprechende Fläche angeordnet, die relativ zur linken Fläche um etwa 10 K wärmer ist. In einer leistungsfähigeren Ausführung kann die Temperatur durch Heizen oder Kühlen dem jeweils eingestellten Temperaturfenster angepaßt werden. Diese Fläche ist die Strahlungsreferenzfläche für den Regelkreis, der die unterschiedlichen Empfindlichkeiten der einzelnen Detektorelemente durch Beeinflussung des Übertragungsfaktors des Stellgliedes SG1 ausgleicht. Die Berechnung der Stellgrößen und die Ansteuerung des entsprechenden D/A-Wandlers erfolgt durch den System-Kontroller.

Im eingelaufenen Zustand des Reglers sind die Amplituden der einzelnen Kanäle am Ausgang des Stellgliedes SG1, wenn die Strahlungsreferenzfläche abgetastet wird, alle gleich groß. Damit das Referenzsignal die optimale Größe hat, wird während dieser Zeit, durch Eingriff auf das Steuersignal K für die Stellglieder SG2, SG3, die Verstärkung des Hauptverstärkers kurzfristig verändert. (Hauptverstärker ist die Verstärkerschaltung vom Verstärker VE bis V4).

Der Widerstand R1 in Fig. 1 kann durch eine Stromquelle ersetzt werden. Weiterhin können für die elektronischen Schalter T1, T3 in Fig. 1 andere als Schalter wirkende Bauelemente verwendet werden. Wie zu Fig. 1 beschrieben, bietet die Anordnung des Detektors im Emitterkreis Vorteile. Grundsätzlich kann der Detektor aber auch im Basiskreis eingefügt werden, wie Fig. 7 zeigt. Allerdings sind dann mehr Bauelemente erforderlich, wenn auch noch die Offset-Regelspannung OS der Basis zugeführt werden soll. Weiterhin können die elektronischen Schalter T1, T3 in Fig. 1 zu verschiedenen Zeiten leitend gemacht werden.

Schließlich kann auch der Widerstand R1 in Fig. 1 bzw. die äquivalente Stromquelle vollkommen entfallen. Der Ladungsverlust des Kondensators C2 durch den Gleichstrom des Transistors T2 wird dann kurzzeitig (kurz im Vergleich zur Abtastperiodendauer) über einen elektronischen Schalter ersetzt, wie Fig. 7 zeigt. Prinzipiell kann das über den elektronischen Schalter T3 erfolgen. Mit den heute verfügbaren Bauelementen ist es aber schwierig, so große Ladungen zu ersetzen, ohne die Auswertung der wesentlich kleineren Signalladung zu stören. Deswegen ist es günstiger, einen zweiten elektronischen Schalter T4 vorzusehen, der den Ladungsausgleich für den Transistorgleichstrom zu einem Zeitpunkt vornimmt, zu dem der elektronische Schalter T3 gesperrt ist. Die Ladungsmenge für den Ladungsausgleich für den Transistorgleichstrom kann mit Hilfe des oben beschriebenen Offset-Spannungsreglers geregelt werden. In diesem Fall kann die Sample- und Hold-Schaltung T1, C1 im Basiskreis des Transistors T2 entfallen.

Wegen der kurzen verfügbaren Umladezeiten für die Kondensatoren C1 bzw. C2 ist es vorteilhaft, Umladeschaltungen zu verwenden, mit denen diese Kondensatoren in Zeiten umgeladen werden können, die viel kleiner als das Produkt (C1 . R11) bzw.(C2.R11) sind. Dabei ist R11 der unerwünschte Widerstand des elektronischen Schalters im eingeschalteten Zustand des Schalters.

Fig. 4 zeigt solch eine aktive Schnellumladeschaltung. Der Kollektorstrom des Transistors T2 bzw. sein Basisstrom und andere Leckströme sind hier durch die Stromquelle Q11 symbolisiert. Der umzuladende Kondensator C11 (entsprechend C2 in Fig. 1) wird über den elektronischen Schalter S11 mit dem inneren Widerstand R11 entladen. An dem Widerstand R12 verursacht der Entladestrom einen Spannungsabfall. Dieser Spannungsabfall liegt nach Vorzeichenumkehr im Verstärker V11 am Eingang des Verstärkers V12. Das Vorzeichen dieser Rückkopplung ist so gewählt, daß der Verstärker über die Widerstände R13, R12 an den elektronischen Schalter eine Spannung legt, die den Umladeström erhöht. Durch die Wahl der Widerstände R12, R13 kann der negative Innenwiderstand der Umladeschaltung eingestellt werden. Wegen der unvermeidlichen Toleranzen kann jedoch praktisch der resultierende Entladewiderstand nur um etwa einen Faktor 10 verkleinert werden. Die Spannung, auf die der Kondensator C11 umgeladen wird, wird durch die Referenz-Spannung U₀ vorgegeben, A11 ist eine Summierstufe.

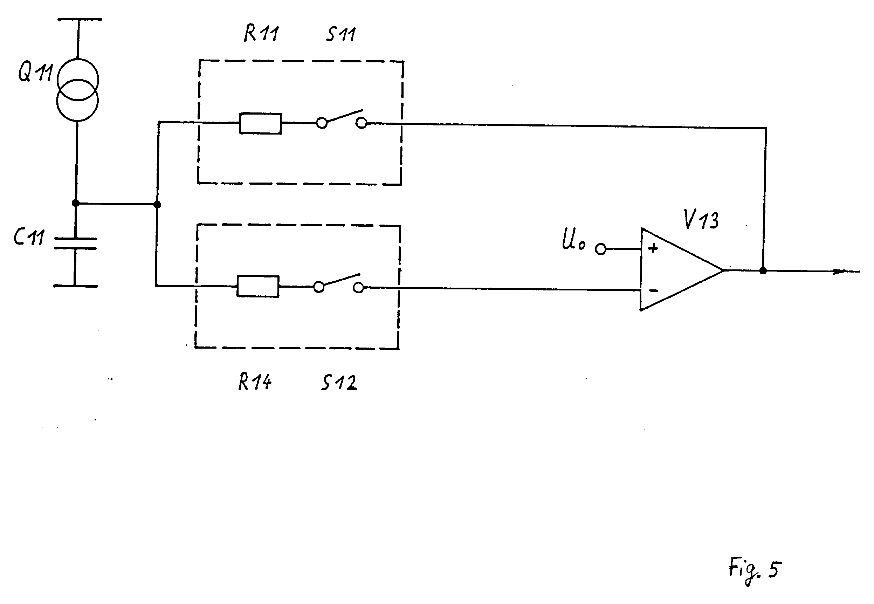

Eine Schnellumladeschaltung, mit der der resultierende Entladewiderstand auch bei sehr kurzen Umladezeiten um mehr als einen Faktor 50 verringert werden kann, zeigt Fig. 5. Über einen zweiten elektronischen Schalter S12, R14 wird die momentane Spannungsdifferenz zwischen der Spannung am Kondensator C11 und der Referenzspannung U₀ ermittelt und entsprechend dieser Differenz mittels des Verstärkers V13 an den elektronischen Schalter S11, über den der Umladestrom fließt, eine Spannung angelegt, die den Umladestrom vergrößert.

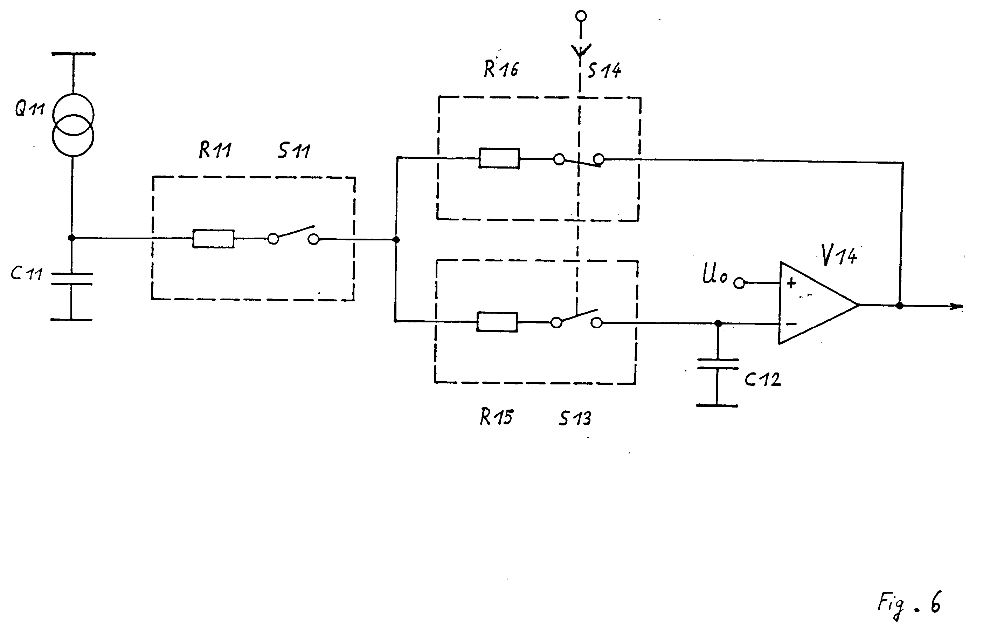

Bei der Schaltung nach Fig. 5 ist. in jedem Vorverstärker ein zusätzlicher elektronischer Schalter S12 erforderlich. Mit der Schnell-umladeschaltung nach Fig. 6 werden zwei weiterer elektronischer Schalter S13, S14 vorgesehen, die nur einmal erforderlich sind. Diese beiden Schalter schalten komplementär zueinander, d.h. wenn der eine Schalter geschlossen ist, dann ist der andere Schalter offen. Während der Entladezeit (z.B. 40 ns) schalten die Schalter S13, S14 viele Male um (z.B. im Abstand von 2 ns). Während des Sensor-Zeitabschnittes lädt sich der Kondensator C12 (der viel kleiner als der Kondensator C11 ist) auf die Spannung, die am Kondensator C11 steht, auf. Am Ausgang des Verstärkers V14 steht eine Spannung, die proportional zur Spannungsdifferenz zwischen der Spannung am Kondensator C11 und der Referenzspannung Uo ist. Im anderen Zeitabschnitt, dem Generatorzeitabschnitt, wird diese Spannung an den elektronischen Schalter S11 gelegt. Weil der Betrag der Verstärkerausgangsspannung viel größer und das Vorzeichen relativ zur Referenzspannung Vo umgekehrt wie die Spannung am Kondensator C11 ist, wird der Umladevorgang beschleunigt.

## Patentansprüche

1. Schaltungsanordnung für Infrarotdetektoren in Wärmebildgeräten mit Fotowiderständen als Detektorelemente,
**dadurch gekennzeichnet**, daß jedem Detektorelement (D) ein Transistor zugeordnet ist, und daß jedes Detektorelement (D) in der Emitterleitung des jeweiligen Transistors (T2) liegt, dessen Kollektorstrom über eine Abtastperiode in einen dem jeweiligen Transistor zugeordneten Kondensator (C2) integriert wird, der als wesentliche Belastung des Kollektorstromkreises in der Kollektorleitung des jeweiligen Transistors (T2) liegt, wobei am Ende der Abtastperiode die Kondensatoren (C2) über einen dem jeweiligen Kondensator zugeordneten ersten elektronischen Schalter (T3) sequentiell auf ein vorgegebenes Potential entladen werden und gleichzeitig über einen dem jeweiligen Kondensator zugeordneten zweiten elektronischen Schalter (T1) ein Offset-Korrekturwert dem jeweiligen Transistor (T2) zugeführt wird und daß die Ausgänge der ersten elektronischen Schalter jedes Detektorelementes am Eingang eines gemeinsamen Entladeverstärkers (VE) liegen.

2. Schaltungsanordnung nach Anspruch 1, dadurch gekennzeichnet, daß die Entladedauer wesentlich kürzer als die Abtastperiode, vorzugsweise gleich oder kleiner als der N-te Teil der Abtastperiode ist, wobei N die Anzahl der Detektorelemente ist und die elektrische Ladung oder der Strom während der Entladung als Maß für die Pixelamplitude ausgewertet wird.

3. Schaltungsanordnung nach Anspruch 1, dadurch gekennzeichnet, daß der Kollektor jedes Transistors (T2) mit einem Widerstand (R1) oder einer Stromquelle mit der Betriebsspannung verbunden ist.

4. Schaltungsanordnung nach Anspruch 1, dadurch gekennzeichnet, daß in Reihe zu jedem Detektorelement eine Induktivität (L) angeordnet ist.

5. Schaltungsanordnung nach Anspruch 1, dadurch gekennzeichnet, daß im Basiskreis jedes Transistors (T2) eine Sample- und Hold-Schaltung angeordnet ist und daß mit dieser Sample- und Hold-Schaltung das Basispotential periodisch so eingestellt wird, daß die Ladung im jeweiligen Kondensator (C2) am Ende der Abtastperiode beim Abtasten der Klemmfläche einen vorgegebenen Wert hat.

6. Schaltungsanordnung nach Anspruch 1, dadurch gekennzeichnet, daß die Entladezeit, die notwendig ist, um die Kondensatoren (C2) über den jeweiligen ersten elektronischen Schalter (T3) zu entladen, durch eine aktive Entladeschaltung verkürzt wird.

7. Schaltungsanordnung nach Anspruch 1, dadurch gekennzeichnet, daß mit einem Regelkreis die Offsetspannung an den Eingängen der im Zusammenwirken mit den ersten elektronischen Schaltern (T3) von den Transistoren (T2), den Widerständen (R1), den Induktivitäten (L) und den Kondensatoren (C2) gebildeten Vorserstärkern zu Null geregelt werden.

## Claims

1. Circuit arrangement for infrared detectors in thermal imaging apparatus with light-dependent resistors as detector elements, characterised in that a transistor is associated with each detector element (D), and in that each detector element (d) lies in the emitter line of the respective transistor (T2), whose collector current is integrated over a scanning period into a condenser (C2) associated with the respective transistor, said condenser lying as a substantial charge of the collector current circuit in the collector line of the respective transistor (T2), the condensers (C2) are discharged in sequence, at the end of the scanning period via a first electronic switch (T3), associated with the respective condenser, to a predetermined potential, and simultaneously an offset correcting value is passed via a second electronic switch (T1), associated with the respective condenser, to the respective transistor (T2), and in that the outputs of the first electronic switches of each detector element lie at the input of a common discharge amplifier (VE).

2. Circuit arrangement according to claim 1, characterised in that the discharge duration is substantially shorter than the scanning period, is preferably equal to or smaller than the Nth part of the scanning period, N being the number of detector elements, and the electrical charge or the current being evaluated during the discharge as a measurement of the pixel amplitude.

3. Circuit arrangement according to claim 1, characterised in that the collector of each transistor (T2) is connected to a resistor (R1) or to a current source with the operational voltage.

4. Circuit arrangement according to claim 1, characterised in that an inductance (L) is disposed in series with each detector element.

5. Circuit arrangement according to claim 1, characterised in that a sample-and-hold circuit is disposed in the base circuit of each transistor (T2), and in that by means of this sample-and-hold circuit the base potential is periodically set in such a way that the charge in the respective condenser (C2) has a predetermined value at the end of the scanning period during scanning of the terminal surface.

6. Circuit arrangement according to claim 1, characterised in that the discharge time which is necessary to discharge the condensers (C2) via the respective first electronic switch (T3), is shortened by an active discharge circuit.

7. Circuit arrangement according to claim 1, characterised in that, by means of a regulating circuit, the offset voltage at the inputs of the preamplifiers formed by the transistors (T2), the resistors (R1), the inductances (L) and the condensers (C2), in co-operation with the first electronic switches (T3), are adjusted to zero.

## Revendications

1. Agencement de circuit pour détecteurs à infrarouge dans des caméras à rayonnement thermique comportant des photosrésistances en tant qu'éléments de détecteur, caractérisé en ce qu'à chaque élément de détecteur (D), il est associé un transistor et en ce que chaque élément de détecteur (D) est situé dans la ligne d'émetteur du transistor (T2) associé dont le courant de collecteur est intégré, sur l'étendue d'une période de balayage, dans un condensateur (C2) qui est associé au transistor considéré et qui est situé, de façon à servir de charge importante du circuit de courant de collecteur, dans la ligne de collecteur du transistor (T2) associé, tandis qu'à la fin de la période de balayage, les condensateurs (C2) sont déchargés d'une manière séquentielle à un potentiel préfixé au moyen, pour chacun, d'un premier actionneur électronique (T3) associé au condensateur considéré et qu'en même temps, pour chacun, une valeur de correction offset est envoyée au transistor (T2) considéré au moyen d'un second actionneur électronique (T1) associé au condensateur considéré, et en ce que, pour chacun, la sortie du premier actionneur électronique de chaque élément de détecteur est appliquée à l'entrée d'un amplificateur de décharge (VE) commun.

2. Agencement de circuit selon la revendication 1, caractérisé en ce que la durée de décharge est beaucoup plus courte que la période de balayage, de préférence égale ou inférieure à la n^{ième} partie de la période de balayage, N étant le nombre des éléments de détecteur et la charge électrique ou le courant pendant la décharge étant exploité comme mesure pour l'amplitude de pixel.

3. Agencement de circuit selon la revendication 1, caractérisé en ce que le collecteur de chaque transistor (T2) est relié à une résistance (R1) ou à une source de courant à la tension de service.

4. Agencement de circuit selon la revendication 1, caractérisé en ce que, pour chaque élément de détecteur, une inductance (L) est disposée en série avec cet élément de détecteur.

5. Agencement de circuit selon la revendication 1, caractérisé en ce que, pour chaque transistor (T2), un circuit d'échantillonnage et de maintien est disposé dans le circuit de base de ce transistor et en ce qu'au moyen de ce circuit d'échantillonnage et de maintien, le potentiel de base est réglé périodiquement d'une façon telle que la charge de chaque condensateur (C2) à la fin de la période de balayage, lors du balayage de la surface de verrouillage, a une valeur préfixée.

6. Agencement de circuit selon la revendication 1, caractérisé en ce que le temps de décharge qui est nécessaire pour décharger les condensateurs (C2) chacun au moyen du premier actionneur électronique (T3) associé est rendu plus court au moyen d'un circuit de décharge actif.

7. Agencement de circuit selon la revendication 1, caractérisé en ce qu'au moyen d'un circuit de régulation, les tensions offset aux entrées des préamplificateurs formés, en combinaison avec les premiers actionneurs électroniques (T3), des transistors (T2), des résistances (R1), des inductances (L) et des condensateurs (C2) font l'objet d'une régulation à zéro.
